# EUROPÄISCHE PATENTSCHRIFT

(11) **EP 2 757 074 B1**
(45) Veröffentlichungstag und Bekanntmachung des Hinweises auf die Patenterteilung: **20.07.2016**
(21) Anmeldenummer: 14151933.0
(22) Anmeldetag: 21.01.2014
(51) Int. Cl.: C02F 1/38, C02F 1/62, C02F 101/20, C02F 103/16, H01M 4/04, H01M 4/73, H01M 10/12

(54) **VERFAHREN UND ANLAGE ZUM REINIGEN VON BLEIHALTIGEM ABWASSER**
METHOD AND DEVICE FOR THE PURIFICATION OF WASTE WATER CONTAINING LEAD
PROCÉDÉ ET DISPOSITIF DE NETTOYAGE D'EAUX USÉES CONTENANT DU PLOMB

(30) Priorität: 21.01.2013 AT 202013 U
(43) Veröffentlichungstag der Anmeldung: 23.07.2014
(73) Patentinhaber: HADI Maschinenbau Gesellschaft m.b.H., 3300 Amstetten (AT)
(72) Erfinder: Eigner, Hannes-Peter, 3300 Amstetten (AT)
(74) Vertreter: KLIMENT & HENHAPEL

(56) Entgegenhaltungen:
- WO-A1-84/03692
- DE-A1- 2 552 934
- US-A- 4 024 055
- US-A- 4 165 401
- US-B1- 6 383 388

## Beschreibung

### GEBIET DER ERFINDUNG

Die Erfindung betrifft ein Verfahren zum Reinigen von bleihaltigem Abwasser aus einer Produktionsanlage für Bleiakkumulatoren in einer Prozesswasser-Reinigungsanlage, die mit einer Produktionsanlage kombiniert sein kann, wobei in der Reinigungsanlage zumindest ein Verfahrensschritt des Zentrifugierens des Abwassers durchgeführt wird und beim Zentrifugieren das Abwasser in ein bleihaltiges Zentrifugat einerseits und Klarwasser andererseits getrennt wird, wobei das Klarwasser in die Reinigungsanlage zurückgeführt wird, sowie eine entsprechende kombinierte Produktions- und Reinigungsanlage.

Das erfindungsgemäße Verfahren kann etwa für eine Produktionsanlage für Bleiakkumulatorplatten, im Folgenden Bleiplatten, verwendet werden, wobei in der Produktionsanlage dann zumindest ein Verfahrensschritt des Waschens von Bleiplatten mit Waschwasser durchgeführt wird, bevor das Waschabwasser als Abwasser aus der Produktionsanlage in der Reinigungsanlage zentrifugiert wird.

Bleiplatten, werden seit vielen Jahren unter anderem durch die Methode des auf ein Gitter aufgetragenen Oxids hergestellt (Pasten-Füllverfahren). Dabei wird ein Gitter aus einer Bleilegierung mit einer aus Bleioxid, Schwefelsäure und Wasser bestehenden Paste belegt bzw. befüllt. Das erfindungsgemäße Verfahren kann besonders vorteilhaft für das Abwasser aus der Reinigung dieser derart befüllten Bleiplatten verwendet werden.

Grundsätzlich ist das Verfahren jedoch nicht nur für Abwasser aus einer Produktionsanlage für Bleiakkumulatoren einsetzbar, sondern für jegliches bleihaltige Abwasser.

### STAND DER TECHNIK

Bei der Produktion von Bleiakkumulatoren, genauer den Bleiplatten, nach dem Pasten-Füllverfahren fällt durch die produktionsbedingt notwendige Reinigung der befüllten Platten mit Spülwasser stark mit Blei kontaminiertes Waschabwasser an.

Der Bleigehalt des Waschabwassers besteht aus dem meist an der Sättigungsgrenze liegenden gelösten Anteil und einem hohen ungelösten Anteil.

Dieses Waschabwasser (oder auch ein anderes bleihaltiges Prozesswasser aus der Produktion von Bleiakkumulatoren) wurde bisher in den öffentlichen Wasserkreislauf eingebracht, davor muss jedoch das Waschabwasser auf Grund des hohen Bleigehaltes den Behördenauflagen entsprechend aufbereitet werden. Dies erfolgt in der Regel in einer ersten Stufe entweder durch Sedimentationsanlagen oder durch Zentrifugen, wodurch der Bleigehalt erheblich reduziert wird. Bei Aufbereitung mit Zentrifugen kann Blei aus dem Waschabwasser bzw. Prozesswasser rückgewonnen und der Paste zur Befüllung der Bleiakkumulator-Platten beigemischt werden.

Das so in einer ersten Stufe aufbereitete Waschabwasser bzw. Prozesswasser erfordert in der Regel weitere Aufbereitungsschritte, wie Bleifällung oder Ähnliches, um den Bleigehalt auf einen Wert von in der Regel unter 0,5 mg/l (üblicher Einleitgrenzwert) zu bringen und es dann im öffentlichen Wassernetz entsorgen zu können.

Aus der US 4 024 055 A ist ein Verfahren bekannt, bei dem das rückgewonnene Blei zur Neutralisierung von Schwefelsäure benützt wird.

### DARSTELLUNG DER ERFINDUNG

Es ist eine Aufgabe der vorliegenden Erfindung, ein Verfahren zum Reinigen von bleihaltigem Abwasser aus einer Produktionsanlage für Bleiakkumulatoren zur Verfügung zu stellen, mit welchem die Menge des Abwassers, das in das öffentliche Wassernetz entsorgt werden muss, erheblich reduziert werden kann. Eine weitere Aufgabe der vorliegenden Erfindung ist es, eine Lösung zur Verfügung zu stellen, welche geeignet ist, den weit über dem üblichen Grenzwert von 0,5 mg/l liegenden Anteil von Blei im Abwasser (insbesondere aus einer Produktionsanlage für Bleiakkumulatoren), das in das öffentliche Wassernetz entsorgt werden muss, erheblich zu reduzieren und damit gemeinsam mit der Mengenreduktion eine multiplikative Reduktion der Gesamt-Bleibelastung aus einer Produktionsanlage zu erreichen.

Diese Aufgabe wird durch Anspruch 1 gelöst, welcher ein Verfahren zum Reinigen von bleihaltigem Abwasser in einer Reinigungsanlage betrifft, wobei in der Reinigungsanlage zumindest ein Verfahrensschritt des Zentrifugierens des Abwassers durchgeführt wird und beim Zentrifugieren das Abwasser in ein bleihaltiges Zentrifugat einerseits und Klarwasser andererseits getrennt wird. Erfindungsgemäß ist vorgesehen, dass das Klarwasser in die Reinigungsanlage, insbesondere in die kombinierte Produktions- und Reinigungsanlage, zurückgeführt wird. Das Klarwasser wird folglich nicht, wie bisher, nach weiteren Reinigungsschritten in das öffentliche Wassernetz entsorgt, sondern es verbleibt - etwa in einem Tank - in der Reinigungsanlage und steht damit wieder als Prozesswasser, etwa als Waschwasser, zur Verfügung, sodass ein geschlossener Wasserkreislauf entsteht. Zwar ist dieses im Kreis geführte Wasser auch nach einer bestimmten Anzahl von Kreisläufen auszutauschen, aber es muss nicht nach jedem Kreislauf aus der Produktions- und Reinigungsanlage abgezogen und dem öffentlichen Wassernetz zugeführt werden, sodass sich jedenfalls eine Reduktion des bleihaltigen Abwassers ergibt.

Die für die Weiterverwendung des Zentrifugats gewünschte Konsistenz kann durch entsprechende Einstellung der Zentrifuge erreicht werden. Das Zentrifugat des Waschabwassers besteht im Wesentlichen aus einem Blei-Wassergemisch welches in seiner Konsistenz (abhängig vom Wasseranteil) von zähflüssig bis staubförmig eingestellt werden kann. Damit stehen verschiedene Wiederverwendungsmöglichkeiten offen.

Das Klarwasser, das durch Zentrifugieren des Waschabwassers entsteht, enthält keine ungelösten, jedoch immer noch gelöste Bleiverbindungen.

Nach genauer Analyse wurde festgestellt, dass das nach dem Zentrifugieren von Waschabwasser anfallende Klarwasser erwartungsgemäß praktisch keine ungelösten Bleianteile mehr enthält, überraschender Weise wird aber auch der Anteil von gelöstem Blei deutlich reduziert. Diese Klarwasserqualität eignet sich zur Wiederverwendung als Waschwasser, das Klarwasser kann somit erneut in der Produktionsanlage, etwa als Waschwasser zum Waschen von Bleiplatten, verwendet werden (das Klarwasser kann also über die Produktionsanlage in die Reinigungsanlage zurückgeführt werden). Das dabei entstehende Waschabwasser wird wieder zentrifugiert, wobei das anfallende Klarwasser wieder in der Produktionsanlage, etwa wieder zum Waschen von Bleiplatten, verwendet wird, und so weiter. Die Anzahl der Kreisläufe ist theoretisch nicht begrenzt, praktisch jedoch durch zu erwartendes Ansteigen von vor allem biologischen Anteilen auf eine gewisse Anzahl von Wochen begrenzt.

Die weitere Aufgabe wird ebenfalls durch Anspruch 1 gelöst, indem das Klarwasserohne vorherige Belastung mit Blei (also etwa ohne vorherige Verwendung in der Produktionsanlage) - erneut einmal oder mehrere Male zentrifugiert wird. Die erfindungsgemäße Prozesswasser-Reinigungsanlage umfasst beispielsweise zusätzlich eine Rezirkulationsleitung, welche es ermöglicht, dass das Waschwasser an der Produktionsanlage vorbei direkt (wieder) der Zentrifuge zugeführt wird. Dadurch wird es möglich, den schon beim Zentrifugieren des Waschabwassers festgestellten Effekt der Reduktion von gelöstem Blei durch weiteres Zentrifugieren zu nutzen.

Das heißt, dass Waschwasser, welches durch Zentrifugieren von Waschabwasser bereitgestellt wurde (und gelöste Bleianteile weit über dem Einleitgrenzwert enthält), wenn es erneut ein oder mehrere Male zentrifugiert wird - ohne vorherige Verwendung in der Produktionsanlage, etwa als Waschwasser - einen geringeren Gehalt an gelösten Bleiverbindungen aufweist als nach dem ersten Zentrifugieren. So kann durch ein- oder mehrmaliges Rückführen des Klarwassers auf direktem Wege in die Zentrifuge das Klarwasser so weit gereinigt und der Bleigehalt reduziert werden, dass es auch ohne weitere Reinigungsschritte - vor oder nach dem Zentrifugieren oder zwischen aufeinander folgenden Zentrifugierschritten - in das öffentliche Abwassernetz entsorgt werden kann.

Um bei Stillstand der Produktionsanlage (am Wochenende etc.) feste Ablagerungen durch Austrocknung in den für das Zentrifugieren verwendeten Anlageteilen zu verhindern oder zumindest zu reduzieren, kann vorgesehen sein (bzw. ist zu empfehlen), dass nach Abschluss der Reinigung des Abwassers, insbesondere aus der Produktionsanlage, zumindest die für das Zentrifugieren verwendeten Anlageteile der Reinigungsanlage, insbesondere der kombinierten Produktions- und Reinigungsanlage, mit Wasser, insbesondere Waschwasser, gespült werden.

Die erfindungsgemäße Produktions- und Reinigungsanlage umfasst zumindest eine Produktionsanlage für Bleiakkumulatoren, insbesondere mit einer Einrichtung zum Waschen von Bleiplatten, und eine Zentrifuge zum Trennen des Abwassers, insbesondere des Waschabwassers, aus der Produktionsanlage in Zentrifugat und Klarwasser. Sie ist dadurch gekennzeichnet, dass eine Einrichtung zum Zurückführen des Klarwassers aus der Zentrifuge in die Produktions- und Reinigungsanlage vorgesehen ist.

Die Einrichtung zum Zurückführen des Klarwassers kann zumindest einen Behälter zum Speichern des Klarwassers umfassen, der mit der Produktionsanlage, insbesondere mit der Einrichtung zum Waschen von Bleiplatten, verbindbar ist. Dieser Behälter dient dann etwa als Vorlagebehälter für die Waschwasserpumpe.

Erfindungsgemäß ist dabei vorgesehen, dass die Einrichtung zum Zurückführen des Klarwassers zumindest eine Rezirkulationsleitung zum direkten Rückführen des Klarwassers in die Zentrifuge umfasst. In einer Ausführungsvariante ist mittels der Rezirkulationsleitung zumindest ein Behälter zum Speichern des Klarwassers mit dem Eingang der Zentrifuge verbindbar.

### WEGE ZUR AUSFÜHRUNG DER ERFINDUNG

In den Figuren ist eine beispielhafte erfindungsgemäße Anlage schematisch dargestellt. Dabei zeigt
Fig. 1 eine Produktions- und Reinigungsanlage im Normalbetrieb,
Fig. 2 die Produktions- und Reinigungsanlage aus Fig. 1 im Betriebsfall der Rückführung des Klarwassers in die Zentrifuge,
Fig. 3 die Produktions- und Reinigungsanlage aus Fig. 1 im Betriebsfall des Spülens und
Fig. 4 die Produktions- und Reinigungsanlage aus Fig. 1 im Betriebsfall des Einleitens des Klarwassers in das öffentliche Abwassernetz.

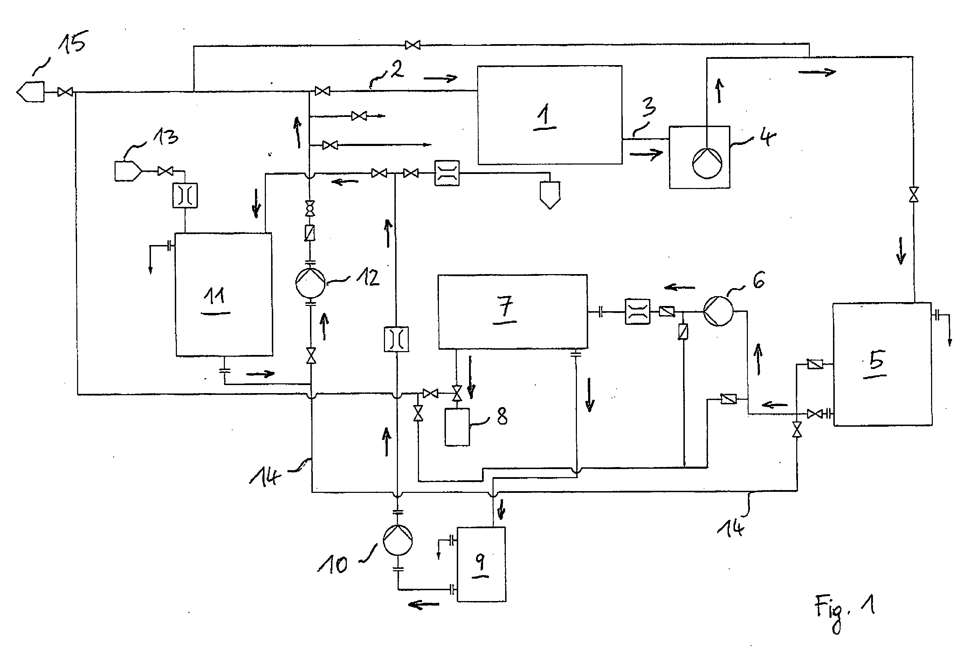

In Fig. 1 ist eine Produktionsanlage 1 in Form einer Pasten-Füll-Maschine dargestellt. Die Produktionsanlage 1 umfasst eine Zuführung 2 für Waschwasser in die Produktionsanlage, eine Ableitung 3 für Waschabwasser aus der Produktionsanlage, die in einen Prozesswassersumpf 4 mündet, und eben diesen Prozesswassersumpf 4. Die Reinigungsanlage umfasst einen Prozesswassertank 5, der das Waschabwasser aus dem Prozesswassersumpf 4 aufnimmt und als Vorlagebehälter für die Beschickungspumpe 6 der Zentrifuge 7 dient, welche den wesentlichen Bestandteil der Reinigungsanlage bildet. Das Zentrifugat wird in einem Zentrifugatbehälter 8 gesammelt, das Klarwasser in einem Klarwassertank 9.

Das Klarwasser aus dem Klarwassertank 9 kann mittels einer Rückführungspumpe 10 in einen Waschwassertank 11 gefördert werden. Der Waschwassertank 11 versorgt über eine Waschwasserpumpe 12 und die Zuführung 2 die Produktionsanlage 1 mit Waschwasser und kann mit Frischwasser 13 befüllt werden. Der Waschwassertank 11 ist jedoch auch mit der Rezirkulationsleitung 14 verbunden, welche vor der Beschickungspumpe 6 der Zentrifuge 7 mündet und mit welcher somit Klarwasser aus dem Klarwassertank 9 über den Waschwassertank 11 wieder in die Zentrifuge 7 rezirkuliert werden kann.

Die Flussrichtung der einzelnen Medien ist durch Pfeile neben den entsprechenden Leitungen in Fig. 1 dargestellt. Vor dem Normalbetrieb wird zuerst Frischwasser 13, etwa aus dem öffentlichen Wassernetz, in den Waschwassertank 11 gefült, welcher als Vorlagebehälter für die Waschwasserpumpe 12 dient. Im Normalbetrieb wird mit der Waschwasserpumpe 12 die erforderliche Menge Waschwasser mit dem erforderlichen Druck aus dem Waschwassertank 11 zur Produktionsanlage 1, der Pasten-Füll-Maschine, gepumpt. Durch die automatische Regelung der Produktionsanlage 1 wird der Spül- bzw. Waschvorgang der produzierten Bleiplatten gesteuert und das anfallende Prozesswasser, in diesem Fall das Waschabwasser, gesammelt, beispielsweise in einem Prozesswassersumpf 4. Von dort wird es (je nach örtlicher Lage durch Pumpen oder freien Zulauf) in einen Prozesswassertank 5 eingeleitet. Ein eingebautes Rührwerk im Prozesswassertank 5 sorgt für die homogene Mischung des Prozesswassers.

Durch die Beschickungspumpe 6 wird entsprechend den definierten Erfordernissen Prozesswasser der Zentrifuge 7 zugeführt und diese trennt das Prozesswasser in zwei Fraktionen: die erste Fraktion ist das Zentrifugat, das in der Regel als Feststoff vorliegt, wobei das Zentrifugat durch entsprechende Einstellungen in einer vom Produktionsanlagenbetreiber gewünschten Konsistenz für die Weiterverwendung (z.B. Pastenbeimischung) erzeugt wird. Die zweite Fraktion ist das Klarwasser: dieses gereinigte Prozesswasser wird in weiterer Folge als Waschwasser wiederverwendet.

Die Aufbereitung des Prozesswassers (Waschabwassers) durch die Zentrifuge 7 startet automatisch abhängig vom Füllstand im Prozesswassertank 5. Nach Produktionsende in der Produktionsanlage 1 wird das Prozesswasser durch die Zentrifuge 7 vollständig abgearbeitet und die Aufbereitung automatisch beendet.

Zum Schließen des Kreislaufs wird das Klarwasser aus der Zentrifuge 7 über die Rückführungspumpe 10 in den Waschwassertank 11 gefördert und steht so zur Wiederverwendung als Waschwasser für die Produktionsanlage 1 zur Verfügung.

In Versuchen konnte nachgewiesen werden, dass eine Kreislaufdauer von zumindest zwei Wochen möglich ist, wobei sogar von einer längeren möglichen Kreislaufdauer auszugehen ist. Bei einer täglich durchschnittlichen Anzahl von drei Kreisläufen und einer Fünftageswoche bedeutet dies eine Reduktion der Prozesswassermenge auf ein Dreißigstel oder ca. 3,5% gegenüber einem herkömmlichen "Durchlaufbetrieb", wo das Prozesswasser (das Klarwasser) nach jedem Kreislauf über die Einleitung 15 in das öffentliche Abwassernetz entsorgt werden muss. Beim erfindungsgemäßen Verfahren erfolgt das Abpumpen in die Einleitung 15 - falls die behördlichen Grenzwerte für Blei eingehalten sind - oder in entsprechende Anlagen zur weiteren Behandlung des Waschabwassers (Qualitätsverbesserung auf Behördenauflagewerte) erst nach einer Kreislaufzeit bzw. Kreislaufanzahl von mehreren Kreisläufen.

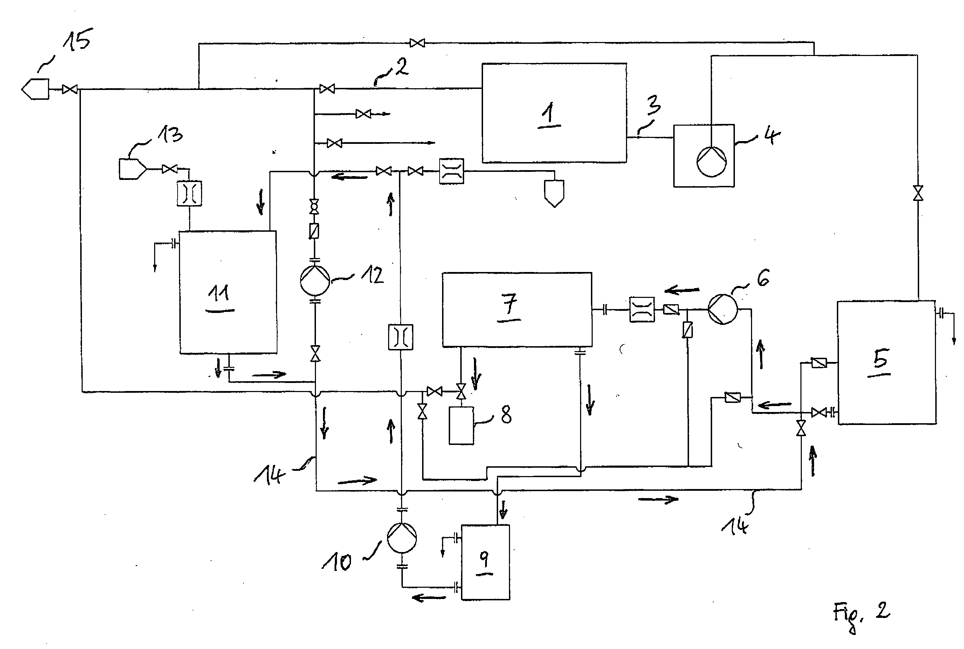

Fig. 2 zeigt die Produktions- und Reinigungsanlage aus Fig. 1 im Betriebsfall der Rückführung (Rezirkulation) des Klarwassers in die Zentrifuge. Es ist eine direkte Rückführung des Waschwassers aus dem Waschwassertank 11, das ja in diesem Betriebsfall das Klarwasser aus dem Klarwassertank 9 ist, zur Wiederbeschickung der Zentrifuge 7 vorgesehen. Dieser Betriebsfall tritt etwa anschließend an den Normalbetrieb aus Fig. 1 auf und bedingt, dass die gelösten Bleianteile (weit über dem üblichen Einleitwert 0,5 mg/l) aus dem Waschwasser im Waschwassertank 11 durch Nutzung des Effektes der Reduktion von gelöstem Blei aus Wasser durch Zentrifugieren in ein oder mehreren Durchläufen erheblich reduziert bzw. sogar unter diesen Grenzwert gebracht wird.

Das im Waschwassertank 11 gesammelte Klarwasser aus dem Klarwassertank 9 wird über die Rezirkulationsleitung 14 und die Beschickungspumpe 6 aus dem Waschwassertank 11 (die Zuleitung zur Waschwasserpumpe 12 ist dabei gesperrt) in die Zentrifuge 7 geleitet. Das nach der Zentrifuge aufgefangene Klarwasser wird über den Klarwassertank 9 wieder in den Waschwassertank 11 geführt, von wo aus wieder ein- oder mehrmals eine Rezirkulation stattfinden kann.

Die durch Analysen festgestellten Werte von gelöstem Blei im Prozesswasser (Waschabwasser) werden beim Zentrifugieren von Prozesswasser reduziert, und zwar deutlich, obwohl dies nach bisheriger Fachmeinung nicht möglich war. Dieser Effekt ist auch beim wiederholten Zentrifugieren von - aus Waschabwasser durch Zentrifugieren gewonnenem - Waschabwasser erzielbar.

So wurde in Versuchen mit Waschabwasser folgender Duchschnittswert erreicht: Normal anfallendes Waschabwasser aus einer Produktionsanlage 1 wurde zentrifugiert und es wurde ein Wert von gelöstem Blei mit 34,7 mg/l erreicht, ungelöstes Blei ist nicht nachweisbar. In einem zweiten, neuerlichen Durchlauf nach direkter Rückführung in die Zentrifuge 7 wurde ein Wert von 4-5 mg/l erreicht. In einem dritten neuerlichen Durchlauf nach direkter Rückführung in die Zentrifuge 7 wurde ein Wert von 1,2 bis 2 mg/l erreicht. Es ist davon auszugehen, dass zumindest der Behördengrenzwert für Blei im Wasser ohne weitere Aufbereitungsschritte erreichbar ist.

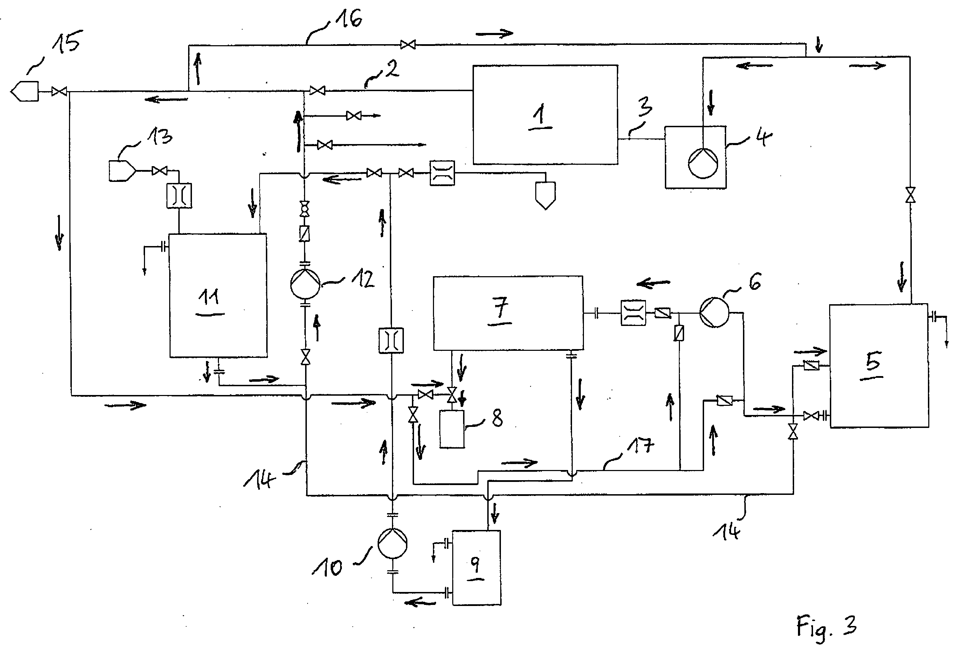

Fig. 3 zeigt die Produktions- und Reinigungsanlage aus Fig. 1 bzw. Fig. 2 im Betriebsfall des Spülens. Nach dem Ende der Prozesswasseraufbereitung, wenn also der Prozesswassertank 5 leer ist, kann die Zentrifuge (aber auch die anderen Teile der Produktions- und Reinigungsanlage, die mit bleihaltigem Wasser in Berührung gekommen sind) für einen bevorstehenden längeren Stillstand gespült und "konserviert" werden. Dies dient zur Vermeidung von festen Ablagerungen in den Anlagenteilen durch Austrocknen.

Beim Spülen sind die Waschwasserpumpe 12 und die Beschickungspumpe 6 in Betrieb. Spülwasser wird aus dem Waschwassertank 11 über die Waschwasserpumpe 12 in die Spülleitung 16 geleitet, welche als Bypass zur Zuführung 2, zur Produktionsanlage 1 und zur Ableitung 3 ausgeführt ist. Von der Spülleitung 16 aus wird die Verbindungleitung zwischen Prozesswassersumpf 4 und Prozesswassertank 5 gespült, das Spülwasser wird im Prozesswassersumpf 4 bzw. Prozesswassertank 5 aufgefangen.

Weiters wird mit der Waschwasserpumpe 12 Spülwasser auch in die Zuleitung zur Einleitung 13 in das öffentliche Abwassernetz gepumpt, jedoch nicht in die Einleitung (diese ist mittels Ventil versperrt). Das Spülwasser gelangt dann weiter zur Leitung, durch welche Zentrifugat in den Zentrifugatbehälter 8 geführt wird und von dort in den Zentrifugatbehälter 8. Ein weiterer Teilstrom des Spülwassers wird durch eine zweite Spülleitung 17 einerseits sowohl in die Leitung zwischen Beschickungspumpe 6 und Prozesswassertank 5 geführt und schließlich im Prozesswassertank 5 aufgefangen, andererseits auch zwischen Beschickungspumpe 6 und Zentrifuge 7 eingeleitet und weiter in die Zentrifuge 7 geleitet, um anschließend im Zentrifugatbehälter 8 bzw. Klarwassertank 9 wieder aufgefangen zu werden. Das Spülwasser aus dem Klarwassertank 9 wird wieder in den Waschwassertank 11 zurückgeführt.

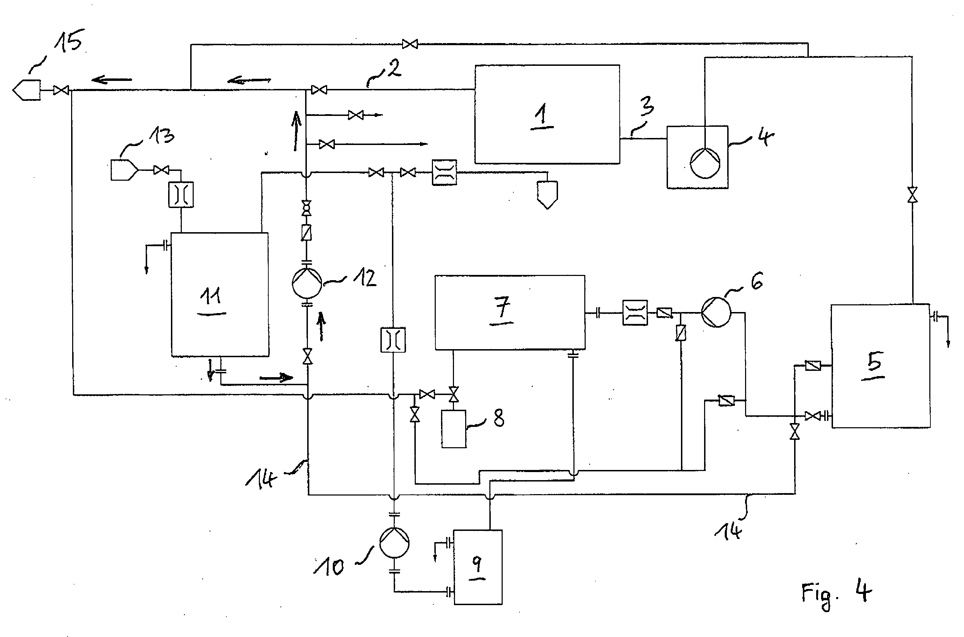

Fig. 4 zeigt die Produktions- und Reinigungsanlage aus den Fig. 1, 2 bzw. 3 im Betriebsfall des Einleitens des Klarwassers in das öffentliche Abwassernetz. Dieser Betriebsfall tritt dann auf, wenn
- entweder das Spülwasser nach Beendigen des Spülens gemäß Fig. 3 aus dem Waschwassertank 11 entfernt werden muss,
- oder wenn nach einer bestimmten Kreislaufzeit bzw. Kreislaufanzahl von mehreren Kreisläufen gemäß Fig. 1 das Prozesswasser aus dem Waschwassertank 11 abgepumpt wird,
oder wenn nach ein- oder mehrmaliger Rezirkulation gemäß Fig. 2 das weitgehend von Blei gereinigte Klarwasser im Waschwassertank 11 zu entfernen ist.

Beim Einleiten des Klarwassers in das öffentliche Abwassernetz wird das im Waschwassertank 11 befindliche Wasser mittels der Waschwasserpumpe 12 zur Einleitung 15 in das öffentliche Abwassernetz gepumpt, bis der Waschwassertank 11 leer ist. Anschließend kann dieser wieder mit Frischwasser 13 befüllt und der Normalbetrieb gemäß Fig. 1 gestartet werden.

Die in den Fig. 1 bis 4 als Beispiel dargestellte kombinierten Produktions- und Reinigungsanlage verfügt über einen Prozesswassertank 5 und einen Waschwassertank 11 mit jeweils etwa 2,5 m³ Fassungsvermögen, einem Klarwassertank 9 mit etwa 0,1 m³ Fassungsvermögen und einem Zentrifugatbehälter 8 mit etwa 25 kg Fassungsvermögen. Die Zentrifuge 7 ist in diesem Beispiel als klassische Trennzentrifuge oder Dekanter ausgeführt, wie sie z.B. auch im Bereich der Klärschlammaufbereitung Anwendung findet. Sie verfügt über eine maximal mögliche Drehzahl von 5.500 U/min, was für die weitere Reduktion des gelösten Bleianteils notwendig und ausreichend ist. Im konkreten Fall wurde eine Zentrifuge des Typs GEA CD 205-00-32 verwendet.

Es braucht, weil es für den Fachmann klar ist, hier nicht näher ausgeführt werden, dass für die unterschiedlichen Betriebsfälle jeweils unterschiedliche Anlagenteile mittels in den Fig. 1-4 eingezeichneten Ventilen verschlossen werden müssen.

Die erfindungsgemäße Anlage kann als sowohl als integrierte Anlage ausgebildet sein, wo die Produktionsanlage 1 mit Prozesswassersumpf 4 einerseits und die Reinigungsanlage 1 andererseits (umfassend Prozesswassertank 5, Zentrifuge 7, Zentrifugatbehälter 8, Klarwassertank 9, Waschwassertank 11 und zugehörige Pumpen) fest miteinander verbunden sind. Es können jedoch auch bestehende Produktionsanlagen 1 mit einer erfindungsgemäßen Reinigungsanlage nachgerüstet werden, wobei die einzelnen genannten Elemente der Reinigungsanlage dabei in einem Standardcontainer angeordnet sein und an die entsprechenden Anschlüsse der Produktionsanlage angeschlossen werden können.

### BEZUGSZEICHENLISTE

- 1: Produktionsanlage (Pasten-Füll-Maschine)
- 2: Zuführung für Waschwasser in die Produktionsanlage 1
- 3: Ableitung für Waschabwasser aus der Produktionsanlage 1
- 4: Prozesswassersumpf
- 5: Prozesswassertank
- 6: Beschickungspumpe der Zentrifuge 7
- 7: Zentrifuge
- 8: Zentrifugatbehälter
- 9: Klarwassertank
- 10: Rückführungspumpe
- 11: Waschwassertank
- 12: Waschwasserpumpe
- 13: Frischwasser
- 14: Rezirkulationsleitung
- 15: Einleitung in das öffentliche Abwassernetz
- 16: Spülleitung
- 17: zweite Spülleitung

## Patentansprüche

1. Verfahren zum Reinigen von bleihaltigem Abwasser in einer Reinigungsanlage (7), wobei das bleihaltige Abwasser aus einer Produktionsanlage (1) für Bleiakkumulatoren stammt,
und wobei in der Reinigungsanlage zumindest ein Verfahrensschritt des Zentrifugierens des Abwassers durchgeführt wird und beim Zentrifugieren das Abwasser in ein bleihaltiges Zentrifugat einerseits und Klarwasser andererseits getrennt wird, wobei das Klarwasser in die Reinigungsanlage (7) zurückgeführt wird, **dadurch gekennzeichnet,**
**dass** das Klarwasser - ohne vorherige Belastung mit Blei - erneut einmal oder mehrere Male zentrifugiert wird.

2. Verfahren nach Anspruch 1, **dadurch gekennzeichnet, dass** das Klarwasser über die Produktionsanlage (1) in die Reinigungsanlage zurückgeführt wird.

3. Verfahren nach Anspruch 1 oder 2, **dadurch gekennzeichnet, dass** das Klarwasser anschließend in das öffentliche Abwassernetz entsorgt wird.

4. Verfahren nach einem der Ansprüche 1 bis 3, **dadurch gekennzeichnet, dass** nach Abschluss der Reinigung des Abwassers aus der Produktionsanlage (1) zumindest die für das Zentrifugieren verwendeten Anlageteile der Reinigungsanlage mit Wasser gespült werden.

5. Verfahren nach einem der Ansprüche 1 bis 4, **dadurch gekennzeichnet, dass** in der Produktionsanlage (1) zumindest ein Verfahrensschritt des Waschens von Bleiplatten mit Waschwasser durchgeführt wird, bevor das Waschabwasser als Abwasser aus der Produktionsanlage (1) in der Reinigungsanlage (7) zentrifugiert wird.

6. Verfahren nach Anspruch 5, **dadurch gekennzeichnet, dass** das Klarwasser in der Produktionsanlage (1) erneut als Waschwasser zum Waschen von Bleiplatten verwendet wird.

7. Verfahren nach Anspruch 5 oder 6, **dadurch gekennzeichnet, dass** das Klarwasser - ohne vorherige Verwendung als Waschwasser in der Produktionsanlage (1) - erneut einmal oder mehrere Male zentrifugiert wird.

8. Produktions- und Reinigungsanlage zur Durchführung des Verfahrens nach einem der Ansprüche 1 bis 7, umfassend zumindest eine Produktionsanlage (1) für Bleiakkumulatoren und eine Zentrifuge (7) zum Trennen des Abwassers aus der Produktionsanlage in Zentrifugat und Klarwasser, wobei eine Einrichtung zum Zurückführen des Klarwassers aus der Zentrifuge (7) in die Produktions- und Reinigungsanlage vorgesehen ist, **dadurch gekennzeichnet, dass** die Einrichtung zum Zurückführen des Klarwassers zumindest eine Rezirkulationsleitung (14) zum direkten Rückführen des Klarwassers in die Zentrifuge (7) umfasst.

9. Produktions- und Reinigungsanlage nach Anspruch 8, **dadurch gekennzeichnet, dass** die Produktionsanlage (1) eine Einrichtung zum Waschen von Bleiplatten aufweist.

10. Produktions- und Reinigungsanlage nach Anspruch 8 oder 9, **dadurch gekennzeichnet, dass** die Einrichtung zum Zurückführen des Klarwassers zumindest einen Behälter (9, 11) zum Speichern des Klarwassers umfasst, der mit der Produktionsanlage (1), insbesondere mit der Einrichtung zum Waschen von Bleiplatten, verbindbar ist.

11. Produktions- und Reinigungsanlage nach einem der Ansprüche 8 bis 10, **dadurch gekennzeichnet, dass** mittels der Rezirkulationsleitung (14) zumindest ein Behälter (9, 11) zum Speichern des Klarwassers mit dem Eingang der Zentrifuge (7) verbindbar ist.

## Claims

1. A method for the purification of lead-containing waste water in a purification plant (7), wherein the lead-containing waste water originates from a production plant (1) for lead accumulators, and wherein at least one method step of centrifuging the waste water is carried out in the purification plant and the waste water is separated into a lead-containing centrifuge effluent on the one hand and clarified water on the other hand, wherein the clarified water is returned to the purification plant (7), **characterized in that** the clarified water, without the previous contamination with lead, is centrifuged once or several times again.

2. A method according to claim 1, **characterized in that** the clarified water is returned via the production plant (1) to the purification plant.

3. A method according to claim 1 or 2, **characterized in that** the clarified water is subsequently disposed of to the public waste water network.

4. A method according to one of the claims 1 to 3, **characterized in that** at least the plant parts of the purification plant used for centrifuging are flushed with water after completing the purification of the waste water from the production plant (1).

5. A method according to one of the claims 1 to 4, **characterized in that** in the production plant (1) at least one method step of the washing of lead plates is carried out with washing water before the washing water is centrifuged in the purification plant (7) as waste water from the production plant (1).

6. A method according to claim 5, **characterized in that** the clarified water is used in the production plant (1) again as washing water for washing lead plates.

7. A method according to claim 5 or 6, **characterized in that** clarified water, without prior use as washing water in the production plant (1), is centrifuged once or several times again.

8. A production and purification plant for carrying out the method according to one of the claims 1 to 7, comprising at least one production plant (1) for lead accumulators and a centrifuge (7) for separating the waste water from the production plant into centrifuge effluent and clarified water, wherein a device for recirculating the clarified water from the centrifuge (7) to the production and purification plant is provided, **characterized in that** the device for recirculating the clarified water comprises at least one recirculation line (14) for the direct recirculation of the clarified water to the centrifuge (7).

9. A production and purification plant according to claim 8, **characterized in that** the production plant (1) comprises a device for washing lead plates.

10. A production and purification plant according to claim 8 or 9, **characterized in that** the device for recirculating the clarified water comprises at least one container (9, 11) for storing the clarified water, which container can be connected to the production plant (1), especially the device for washing lead plates.

11. A production and purification plant according to one of the claims 8 to 10, **characterized in that** at least one container (9, 11) for storing the clarified water can be connected by means of the recirculation line (14) to the input of the centrifuge (7).

## Revendications

1. Procédé pour l'épuration d'effluents contenant du plomb dans une installation d'épuration (7),
dans lequel l'eau contenant du plomb provient d'une installation de production (1) d'accumulateurs au plomb,
et dans lequel au moins une étape de centrifugation des effluents est exécutée dans l'installation d'épuration et la centrifugation sépare les effluents en une produit de centrifugation contenant du plomb, d'une part, et de l'eau purifiée d'autre part, l'eau purifiée est ramenée à l'installation d'épuration (7), **caractérisé en ce que** l'eau purifiée étant ramenée, sans contamination préalable avec du plomb, une ou plusieurs fois à la centrifugation.

2. Procédé selon la revendication 1, **caractérisé en ce que** l'eau purifiée est ramenée à l'installation d'épuration en passant par l'installation de production (1).

3. Procédé selon la revendication 1 ou 2, **caractérisé en ce que** l'eau purifiée est ensuite évacuée dans le réseau public d'eaux usées.

4. Procédé selon l'une des revendications 1 à 3, **caractérisé en ce qu'**après la fin de l'épuration des effluents issus de l'installation de production (1), les parties de l'installation d'épuration utilisées pour la centrifugation, au minimum, sont rincées à l'eau.

5. Procédé selon l'une des revendications 1 à 4, **caractérisé en ce qu'**au moins une étape de lavage de plaques de plomb avec de l'eau de lavage est exécutée dans l'installation de production (1) avant que l'eau de lavage soit centrifugée dans l'installation d'épuration (7) comme effluent issu de l'installation de production (1).

6. Procédé selon la revendication 5, **caractérisé en ce que** l'eau purifiée est utilisée à nouveau dans l'installation de production (1) comme eau de lavage pour le lavage de plaques de plomb.

7. Procédé selon la revendication 5 ou 6, **caractérisé en ce que** l'eau purifiée est à nouveau centrifugée une ou plusieurs fois, sans avoir été utilisée au préalable comme eau de lavage dans l'installation de production (1).

8. Installation de production et d'épuration pour la mise en oeuvre du procédé selon l'une des revendications 1 à 7, comprenant au moins une installation de production (1) d'accumulateurs au plomb et une centrifugeuse (7) pour séparer les effluents issus de l'installation de production en produit de centrifugation et eau purifiée, dans laquelle est prévu un dispositif pour ramener l'eau purifiée de la centrifugeuse (7) aux installations de production et d'épuration, **caractérisée en ce que** le dispositif pour ramener l'eau purifiée comprend au moins une conduite de recirculation (14) pour ramener directement l'eau purifiée dans la centrifugeuse (7).

9. Installation de production et d'épuration selon la revendication 8, **caractérisée en ce que** l'installation de production (1) comprend un dispositif pour le lavage de plaques de plomb.

10. Installation de production et d'épuration selon la revendication 8 ou 9, **caractérisée en ce que** le dispositif pour ramener l'eau purifiée comprend au moins un réservoir (9, 11) pour stocker l'eau purifiée qui peut être mis en communication avec l'installation de production (1), en particulier avec le dispositif pour le lavage de plaques de plomb.

11. Installation de production et d'épuration selon l'une des revendications 8 à 10, **caractérisé en ce qu'**au moins un réservoir (9, 11) pour stocker l'eau purifiée peut être mis en communication avec l'entrée de la centrifugeuse (7) au moyen d'une conduite de recirculation (14).
